# EUROPEAN PATENT APPLICATION

(11) **EP 1 972 820 A2**
(43) Date of publication of application: **24.09.2008**
(21) Application number: 08152444.9
(22) Date of filing: 07.03.2008
(51) Int. Cl.: F16D 48/02

(54) **Driving force distribution apparatus**

(30) Priority: 23.03.2007 JP 2007075879
(71) Applicant: Univance Corporation, Kosai-city, Shizuoka 431-0494 (JP)
(72) Inventor: Suzuki, Satoru, Shizuoka Shizuoka 431-0494 (JP)
(74) Representative: Thun, Clemens

(57) **Abstract**

A friction clutch which transmits motive power of a main drive shaft to an auxiliary drive shaft, a piston which generates pressing force against the friction clutch, a cylinder chamber which houses the piston movably in the axial direction, a pressure sensor which detects the oil pressure of the cylinder chamber, an hydraulic pump which feeds pressurized oil to the cylinder chamber, a motor which drive the hydraulic pump forward/reversely, and a controller which compares a command from a vehicle with a signal from the pressure sensor and controls the forward/reverse drive of the motor are provided. An hydraulic control valve unit feeds the pressurized oil to the cylinder chamber when the hydraulic pump is rotated forward, prevents outflow of the pressurized oil from the cylinder chamber when forward rotation of the hydraulic pump is stopped, and forcibly discharges the pressurized oil from the cylinder chamber when the hydraulic pump is reversely rotated.

## Description

This application is a priority based on prior application No. JP 2007-075879, filed March 23, 2007, in Japan.

### BACLGROUND OF THE INVENTION

### 1. Field of the Invention

The present invention relates to a driving force distribution apparatus which performs distribution control of drive torque to front wheels, rear wheels, or left/right wheels of an automobile by a friction clutch and, particularly, relates to the driving force distribution apparatus which controls clutch transmission torque by directly feeding pressurized oil to a piston of a piston cylinder mechanism by driving an hydraulic pump by a motor.

### 2. Description of the Related Arts

Conventionally, various types of a driving force distribution apparatus for a four-wheel-drive vehicle which drive an hydraulic pump by a motor, directly feeds pressurized oil to a piston of a piston cylinder mechanism, and controls clutch transmission torque have been proposed.

FIG. 19 shows a conventional driving force distribution apparatus (JP62-50235, JP2004-19768 and JP2004-19769). In FIG. 19, a clutch control mechanism 125 generates pressurized oil by driving an hydraulic pump 146 by a motor 142 and feeds the pressurized oil to a cylinder 134, thereby directly pressing the piston 136 to move it in the axial direction, pressing a friction clutch 116 by a pressing member 138, and controlling transmission torque. A controller 140, which is known as a torque control unit (ECU), controls the number of rotations of the motor 142 so that a torque command value determined based on the vehicle state is achieved. In another conventional driving force distribution apparatus, the oil pressure fed to a piston is increased/reduced by forward/reverse rotation of a motor to control the transmission torque of a friction clutch, and the generated oil pressure of an hydraulic pump at this point is detected by a sensor to control the oil pressure fed to the piston to a target oil pressure; furthermore, when the motor is to be reversely rotated at a high speed, the pressurized oil is caused to flow reversely by operating a quick open valve mechanism provided between a piston chamber and the hydraulic pump; and, if the motor is rotated at a low speed, the quick open valve mechanism is not operated, and the pressurized oil is caused to flow reversely through an orifice provided in parallel with it (JP2001-206092).

However, in such conventional driving force distribution apparatus which controls the clutch transmission torque by driving the hydraulic pump by the motor and feeding pressurized oil to the piston, there is internal leakage of the hydraulic pump or pressurized oil leakage from an oil drainage means such as the orifice provided between the piston chamber and the hydraulic pump; therefore, there is a problem that, in order to maintain transmission torque of the friction clutch, an electric current has to always flow through the motor to keep feeding the pressurized oil to the piston. Generally, a four-wheel drive vehicle requires the function that enables long-time driving while maintaining the transmission torque of a friction clutch in a maximum state. In order to satisfy this function, a motor having large continuous rating has to be used in a conventional device, and there is a problem that the size and weight of the system is increased, thereby increasing the cost. When a small motor is used for reducing the size and weight, the capacity of the hydraulic pump has to be reduced, and, as a result, there is a problem that the responsivity is deteriorated. Thus, either one has to be selected between two choices of selecting a system which is heavy and large although responsivity is good and selecting a system which is light and small although responsivity is bad.

### SUMMARY OF THE INVENTION

According to the present invention to provide a driving force distribution apparatus which enables reduction of size, weight, and cost without sacrificing responsivity is provided.

The present invention is a device which transmits motive power by a friction clutch, characterized by comprising:
a piston which generates pressing force against the friction clutch by an oil pressure;
a cylinder chamber which houses the piston movably in an axial direction;
an hydraulic pump which feeds the pressurized oil to the cylinder chamber when rotated forward;
a motor which drives the hydraulic pump;
a first backflow prevention valve which is between the hydraulic pump and the cylinder chamber and prevents backflow of the pressurized oil from the cylinder chamber;
a control valve mechanism which discharges the pressurized oil of the cylinder chamber when the motor is reversely rotated;
a pressure sensor which detects the oil pressure of the cylinder chamber; and
a control unit which controls the forward/reverse drive of the motor based on target transmission torque obtained from a signal from outside and a signal from the pressure sensor; wherein
the control unit is operated so as to increase the oil pressure of the cylinder chamber by forward rotation of the motor, retain the oil pressure when the forward rotation is stopped, and reduce the oil pressure by reverse rotation, thereby controlling the transmission torque of the friction clutch to be the target transmission torque.

Herein,
when two ports provided in the hydraulic pump are a first pump port which serves as a discharge port in pump forward rotation and serves as a suction port in pump reverse rotation and a second pump port which serves as a suction port in pump forward rotation and serves as a discharge port in pump reverse rotation,
the control valve mechanism is characterized by comprising
a second backflow prevention valve which is disposed between the first pump port and a tank chamber, prevents backflow of the pressurized oil from the first pump port to the tank chamber in pump forward rotation, and is opened in pump reverse rotation so as to feed and cause the oil to be sucked from the tank chamber to the first pump port side;
a third backflow prevention valve which is disposed between the second pump port and the tank chamber, is opened in pump forward rotation so as to feed and cause the oil from the tank chamber to be sucked to the second pump port, and is closed in pump reverse rotation so as to feed the pressurized oil from the second pump port as a forcible opening control oil pressure; and
a forcible valve opening mechanism which is disposed between the cylinder chamber and the tank chamber, is closed in pump forward rotation so as to prevent backflow of the pressurized oil from the cylinder chamber to the tank chamber, and is forcibly opened by the forcible opening control oil pressure fed by closure of the third backflow prevention valve in pump reverse rotation so as to discharge the pressurized oil of the cylinder chamber to the tank chamber.

The forcible valve opening mechanism comprises
a backflow prevention valve which receives the pressurized oil of the cylinder chamber so as to close a discharge channel to the tank chamber; and
a spool valve which is moved backward in the pump forward rotation so as to permit the movement of a valve element of the backflow prevention valve to a closed position, and is moved forward by the forcible opening control oil pressure fed by closure of the third backflow prevention valve in pump reverse rotation so as to push and move the valve element of the backflow prevention valve to an open position.

The backflow prevention valve of the forcible valve opening mechanism forms a valve seat at a flow-in side of the discharge channel communicated with an end of a spool hole formed in the axial direction and disposes the valve element, which closes the channel when pressed by the pressurized oil of the cylinder chamber, at the valve seat; and
the spool valve is provided with, with respect to the spool hole, a drain port which discharges the pressurized oil from the discharge channel of the backflow prevention valve to the tank and a control port which feeds the forcible control pressurized oil, the spool valve element is disposed axially movable in the spool hole, and the spool valve element forms, at a rear portion, a first piston unit which is moved forward by the pressurized oil from the control port and forms, at a distal end portion, a second piston unit which is positioned in the discharge channel of the backflow prevention valve, the second piston unit has a shape in which clearance is varied from the distal end side to the rear so as to increase the discharge flow rate in accordance with forward movement of the spool valve element.

The forcible valve opening mechanism constitutes a pressurized oil circulation system by commonly connecting a communication path to the tank chamber, and a strainer is disposed at the common connecting part.

When target torque of the friction clutch is to be retained at predetermined torque, the control unit stops motor electric power distribution so as to stop the pump when the detection pressure of the pressure sensor reaches a first set pressure corresponding to the target torque in the state in which the hydraulic pump is rotated forward by the electric power distribution of the motor and, every time the detection pressure of the pressure sensor is reduced to a second set pressure which is lower than the first set pressure in the pump stopped state, repeats pump forward rotation by electric power distribution of the motor until the first set pressure is recovered.

When the target torque of the friction clutch is varied at every moment in accordance with the vehicle state, the forward/reverse of the motor is controlled so as to achieve the target torque.

In another mode of the control valve mechanism according to the present invention is characterized by comprising
a one-way clutch for pump drive which transmits forward rotation of the motor to the hydraulic pump and becomes free in reverse rotation of the motor;
a one-way clutch for oil pressure release which transmits reverse rotation of the motor and becomes free in forward rotation of the motor; and
a forcible valve opening mechanism which is disposed between the cylinder chamber and the tank chamber, and is forcibly opened by the reverse rotation of the motor transmitted via the one-way clutch for oil pressure release so as to discharge the pressurized oil of the cylinder chamber to the tank chamber.

In another mode of the control valve mechanism according to the present invention, when two ports provided in the hydraulic pump are a first pump port which serves as a discharge port in pump forward rotation and serves as a suction port in pump reverse rotation and a second pump port which serves as a suction port in pump forward rotation and serves as a discharge port in pump reverse rotation,
the control valve mechanism is characterized by comprising
a one-way clutch for oil pressure release which transmits reverse rotation of the motor and becomes free in forward rotation of the motor; and
a forcible valve opening mechanism which is disposed between the cylinder chamber and the tank chamber and is forcibly opened by the reverse rotation of the motor transmitted via the one-way clutch for oil pressure release so as to discharge the pressurized oil of the cylinder chamber to the tank chamber.

Another mode of the control valve mechanism according to the present invention is
characterized by comprising,
when two ports provided in the hydraulic pump are a first pump port which serves as a discharge port in pump forward rotation and serves as a suction port in pump reverse rotation and a second pump port which serves as a suction port in pump forward rotation and serves as a discharge port in pump reverse rotation,
a second backflow prevention valve which is disposed between the first pump port and the tank chamber, prevents backflow of the pressurized oil from the first pump port to the tank chamber in pump forward rotation, and is opened in pump reverse rotation so as to feed and cause the oil from the tank chamber to be sucked to the first pump port side;
a one-way clutch for oil pressure release which transmits reverse rotation of the motor and becomes free in forward rotation of the motor; and
a forcible valve opening mechanism which is disposed between the cylinder chamber and the tank chamber and is forcibly opened by the reverse rotation of the motor transmitted via the one-way clutch so as to discharge the pressurized oil of the cylinder chamber to the tank chamber.

Herein, the forcible valve opening mechanism comprises
a backflow prevention valve which receives the pressurized oil of the cylinder chamber so as to close the discharge channel to the tank chamber; and
a spool valve which is moved by the reverse rotation of the motor transmitted via the one-way clutch for oil pressure release so as to push and move a valve element of the backflow prevention valve to an open position.

Furthermore, the control unit of the driving force distribution apparatus is characterized by comprising
a pressure sensor zero-point learning unit which causes the motor to rotate reversely upon vehicle initiation so as to release the oil pressure of the cylinder chamber by actuation of the forcible valve opening mechanism, reads a detection value of the pressure sensor in this state, saves the value as a zero-point correction value; and
a detection pressure correcting unit which corrects the detection value of the pressure sensor read during operation of the vehicle by the zero-point correction value.

According to the present invention, when the torque of the friction clutch is to be retained at a predetermined value such as maximum torque, at the point when the pressurized oil fed to the cylinder chamber by pump forward rotation by the motor reaches the predetermined set pressure, the motor electric power distribution is stopped to stop the hydraulic pump; backflow of the pressurized oil from the cylinder chamber to the tank side is prevented in this state by the forcible opening oil pressure control valve unit; therefore, even when a small motor having small continuous rating is used, the transmission torque of the friction clutch can be retained for a long period of time.

When the torque transmission of the friction clutch is to be released, the pressurized oil of the cylinder chamber is discharged to the tank side by operating the hydraulic control valve unit by the opening control oil pressure generated in the pump reversely rotation by the motor. Since it is not the pressurized oil discharge by reversely rotation of the motor, even when the capacity of the hydraulic pump is reduced in accordance with the small motor having small continuous rating, the responsivity of the case in which the torque of the friction clutch is reduced can be enhanced; therefore, the size, weight, and cost can be reduced.

Moreover, since the electric current is not required to be kept flowing through the motor in order to retain the torque; therefore, the electric current capacity of the control unit can be reduced, the control unit can be downsized, cost is reduced, and the durability can be improved. Furthermore, the energy for driving the motor can be also saved as a vehicle, and the fuel cost can be improved. The above and other objects, features, and advantages of the present invention will become more apparent from the following detailed description with reference to the drawings.

### BRIEF DESCRIPTION OF THE DRAWINGS

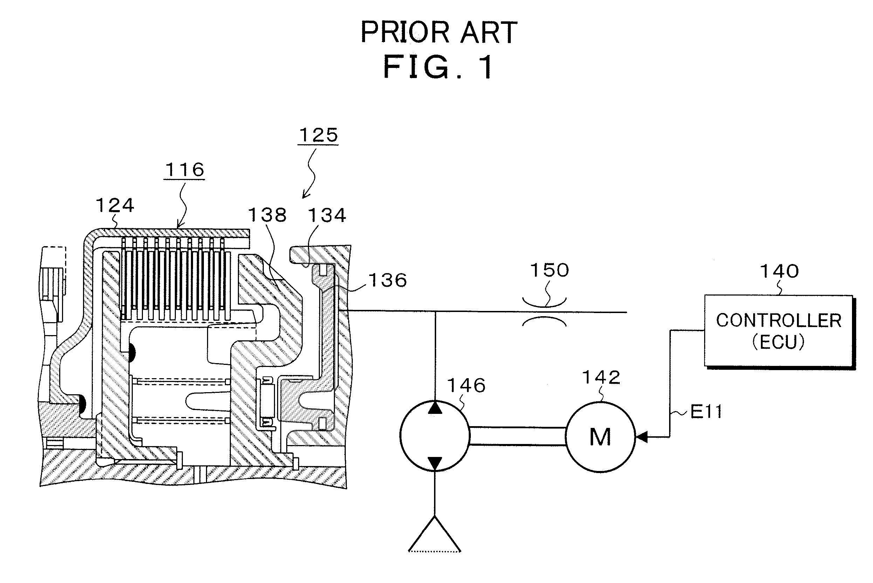

FIG. 1 is an explanatory diagram showing a conventional clutch control mechanism which controls the transmission torque of a friction clutch by hydraulic drive by a motor;
FIG. 2 is a cross sectional drawing showing an embodiment of a driving force distribution apparatus for a four-wheel drive vehicle according to the present invention;
FIG. 3 is an explanatory diagram showing a list of drive modes in the present embodiment;
FIG. 4 is an explanatory diagram showing an embodiment of an hydraulic control valve unit in the present invention;
FIG. 5 is an explanatory diagram showing operation of motor forward rotation in the present embodiment;
FIG. 6 is an explanatory diagram showing operation of the case in which the motor rotated forward in the present embodiment is stopped;
FIGs. 7A and 7B show time charts of motor control that retains the pressurized oil of the cylinder chamber during motor stoppage in the present embodiment;
FIG. 8 is an explanatory diagram showing operation upon motor reverse rotation in the present embodiment;
FIG. 9 is a graph diagram showing the relation between the spool valve moved distance and clearance area in the present embodiment;
FIGs. 10A, 10B, 10C and 10D show explanatory diagrams showing the structure and operation of a forcible valve opening mechanism in the present embodiment;
FIG. 11 is an explanatory diagram focusing on and showing the spool valve element of FIGs. 10A, 10B, 10C and 10D;
FIG. 12 is an explanatory diagram showing operation of the case in which the motor is stopped during reverse rotation in the present embodiment;
FIG. 13 is an explanatory diagram showing a specific embodiment of the present invention;
FIGs. 14A and 14B show explanatory diagrams showing specific another embodiment of the present invention;
FIG. 15 is an explanatory diagram showing another embodiment which mechanically performs the oil discharge operation of the control valve mechanism by motor reverse rotation by using two one-way clutches;
FIGs. 16A and 16B show explanatory diagrams of the control valve mechanism of FIG. 15 that rotates a cam by the one-way clutch and discharges oil;
FIGs. 17A and 17B show explanatory diagrams of the control valve mechanism of FIG. 15 which discharges oil by rotating a gear by the one-way clutch;
FIG. 18 is an explanatory diagram showing another embodiment in which the oil discharge operation of the control valve mechanism is mechanically performed by motor reverse rotation by using a single one-way clutch;
FIG. 19 is a flow chart showing a pressure sensor zero-point learning process in the present embodiment; and
FIG. 20 is a flow chart showing a pressure sensor correcting process in the present embodiment.

### DETAILED DESCRIPTION OF THE PREFFERED EMBODIMENT

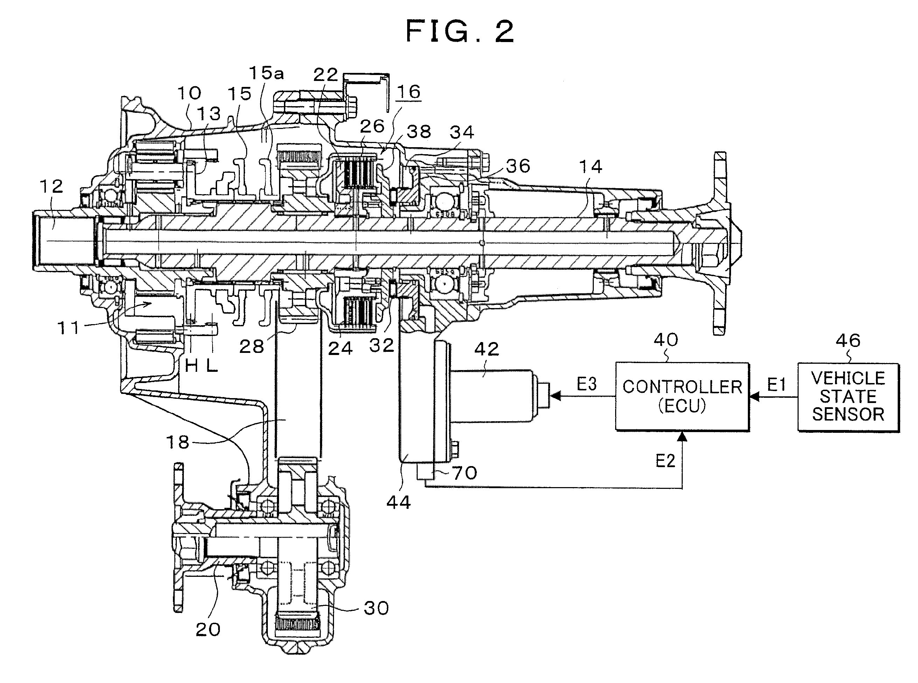

FIG. 2 is a cross sectional drawing showing an embodiment of the case in which a driving force distribution apparatus according to the present invention is applied to a transfer case for a four-wheel drive vehicle based on rear-wheel drive, and it is characterized by controlling transmission torque of a friction clutch by driving a piston by pressurized oil from an hydraulic pump by a motor. In FIG. 2, the transfer case has a case 10, an input shaft 12 which inputs rotation from an engine via an automatic speed change gear or a manual speed change gear is provided at the left side of the case 10, and the input shaft 12 is directly coupled to a rear wheel output shaft 14 via an auxiliary speed changing mechanism 11. In the auxiliary speed changing mechanism 11, a shift gear 13 can be switched by an unshown shift mechanism between two levels, i.e., a H position and a L position. In the state of the H position which is the shown position of the shift gear 13, the input shaft 12 is directly coupled to the rear wheel output shaft 14, and 2H wherein a friction clutch is released or 4H auto/lock wherein drive torque to front wheels is controlled by the friction clutch 16 can be selected. When the shift gear 13 is shifted to the L position, decelerating rotation (carrier rotation) by a planetary gear mechanism of the auxiliary speed changing mechanism 11 is output to the rear wheel drive shaft, and coupling sleeve 15 is coupled, as shown by 15a, to a clutch gear which is integrally provided with a sprocket gear 28 at the front wheel side so as to be directly coupled to the rear wheel drive shaft, thereby implementing 4L lock. The friction clutch 16 is provided coaxially with the rear wheel output shaft 14. The friction clutch 16 fixes a clutch hub 22 to the rear wheel output shaft 14 and couples a clutch drum 24 to a sprocket gear 28 which is rotatably provided with respect to the rear wheel output shaft 14. In parallel with the rear wheel output shaft 14, a front wheel output shaft 20 which outputs power to the other side is provided in the case 10, a sprocket gear 30 is integrally formed with the front wheel output shaft 20, and a chain belt 18 is wound around the sprocket gear and the sprocket gear 28 at the friction clutch 16 side so as to couple them. In such transfer case, in the case of the 4L lock wherein the shift gear 13 of the auxiliary speed changing mechanism 11 is shifted to the L position, control of the friction clutch 16 is not performed, the clutch hub 22 and the clutch drum 24 are separated from each other, instead of that, the sprocket gear 28 is directly coupled to the rear wheel output shaft 14 by the shift of the coupling sleeve 15 to the position shown by 15a, and the driving force of the rear wheel output shaft 14 is directly transmitted to the front wheel output shaft 20 via the sprocket gear 28, the chain belt 18, and the sprocket gear 30. In the case of the 4H auto/lock in which the shift gear 13 of the auxiliary speed changing mechanism 11 is shifted to the H position, the friction clutch 16 is in a control state, and the rotation from the input shaft 12 is transmitted to the front wheel output shaft 20 via the rear wheel output shaft 14, the friction clutch 16 which is in the transmission torque control state, the sprocket gear 28, the chain belt 18, and the sprocket gear 30. With respect to the friction clutch 16, a clutch control mechanism which controls the clutch fastening force of a plurality of clutch plates 26 provided between the clutch hub 22 and the clutch drum 24 is provided. The clutch control mechanism drives an hydraulic pump incorporated in an hydraulic control unit 44 by a motor 42 and feeds the pressurized oil from the hydraulic pump to a cylinder chamber 35 at the right side of a piston 36 slidably provided in a cylinder 34 disposed at the right side of the friction clutch 16, thereby causing the piston 36 to perform a stroke to the left side, pressing the clutch plates 26 by a pressing member 38 via a thrust bearing 32, increasing the clutch fastening force, and controlling the transmission torque. The clutch control mechanism, which is composed of the motor 42, the hydraulic control valve unit 44 incorporating the hydraulic pump, the cylinder 34, the piston 36, and the pressing member 38, is controlled by a controller (control unit) 40 which is known as an electronic control unit (ECU). In the controller 40, as functions realized by execution of programs, a pressure sensor zero-point learning unit 40a, a detected pressure correcting unit 40b, and a control unit 40c are provided. A vehicle state sensor 46 is connected to the controller 40, and the vehicle state sensor 46 outputs the vehicle speed, rudder angle, two-wheel/four-wheel switching, and the like to the controller 40 as a sensor signal E1. Moreover, a pressure sensor which detects the pressure of the pressurized oil fed from the hydraulic pump to the cylinder chamber at the right side of the piston 36 is incorporated in the hydraulic control valve unit 44, and a pressure detection signal E2 from the pressure sensor is input to the controller 40. The control unit 40c of the controller 40 rotates forward/backward the motor 42 by a drive signal E3 so that the clutch transmission torque corresponding to the drive mode of the vehicle based on the signal from the vehicle state sensor 46 is achieved.

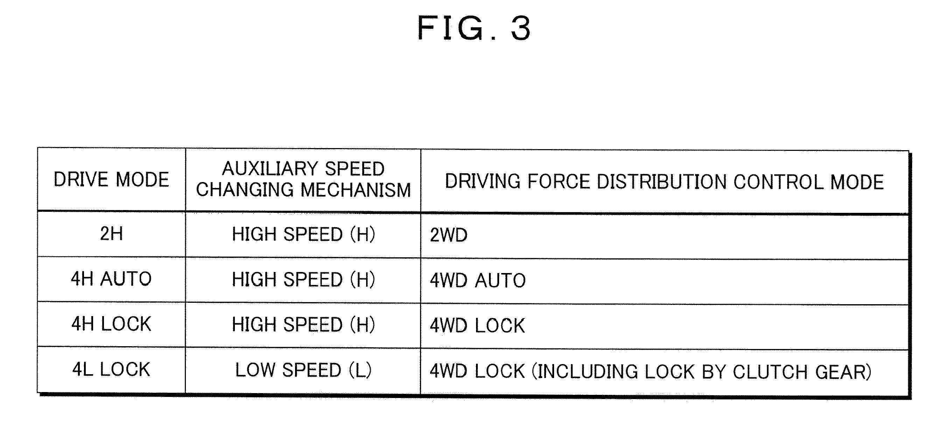

FIG. 3 is a list of drive modes of the four-wheel drive vehicle in the present embodiment, wherein, in the case in which it is equipped with the auxiliary speed changing mechanism, combinations of two-level switching selection between high speeds and low speeds in the auxiliary speed changing mechanism and driving force distribution modes between front and rear wheels are provided, and a driver can arbitrarily select a drive mode. Note that, if it is not equipped with the auxiliary speed changing mechanism, merely the driving force distribution control modes between the front and rear wheels are provided. The driving force distribution control modes between the front and rear wheels in the drive mode list of FIG. 3 are as described below.

### (1) 2WD

This is the mode in which drive is performed merely by the rear wheels in the state in which the friction clutch 16 is separated. It is selected when fuel cost is desired to be improved in paved road driving or the like.

### (2) 4WD auto

This is the mode in which the driving force between the front and rear wheels is automatically controlled to an optimum state by the controller 40 based on the signal from the vehicle state detection sensor. The transmission torque of the friction clutch 16 is varied every moment in the range of 0 to maximum torque. The driver is not required to care about the road surface state, and this mode can be selected at any time.

### (3) 4WD lock

This is the mode in which the transmission torque of the friction clutch 16 is maintained to maximum torque. This is selected when the driving capability as 4WD is desired to be fully exerted in rough road driving or the like. Corresponding to such driving force distribution control modes, the driving force transmission device of the present embodiment performs following operations.

### (1) 2WD

After the pressurized oil of the cylinder chamber 35 is discharged, electric power distribution to the motor 42 is turned off.

### (2) 4WD auto

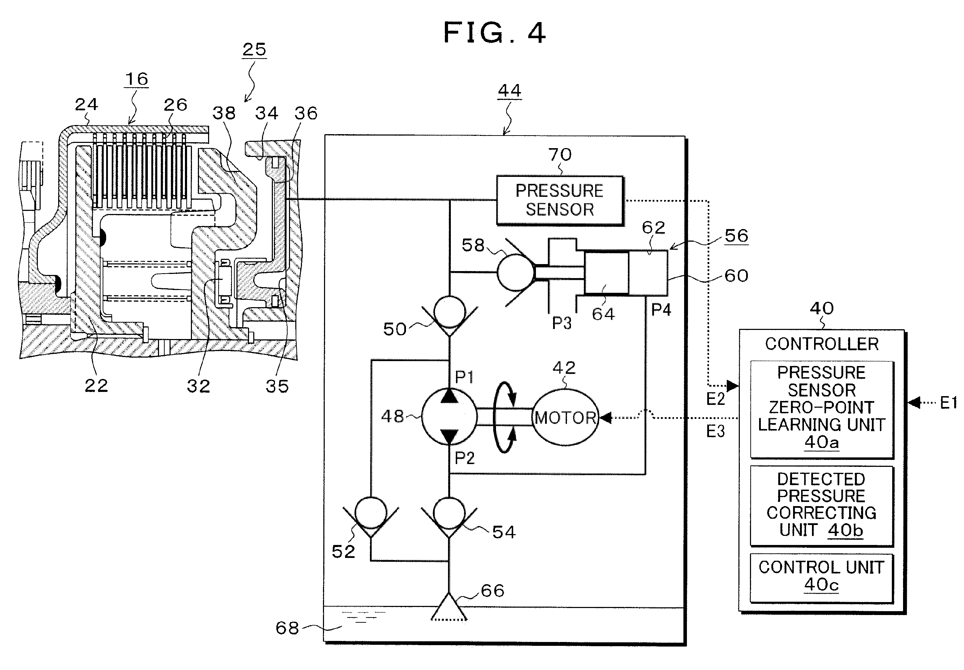

The controller 40 adjusts the current applied to the motor 42 so that the transmission torque of the friction clutch 16 is matched with the target transmission torque which is varied every moment. The motor 48 rotates forward/backward so as to feed pressurized oil to the cylinder chamber 35 or discharge the pressurized oil by operation of a forcible valve opening mechanism 56 shown in FIG. 4, thereby controlling the pressure of the cylinder chamber 35.

### (3) 4WD lock

The controller 40 rotates the motor 42 forward until the transmission torque of the friction clutch 16 reaches the maximum thereof and then turns off the electric power distribution of the motor 42. The pressure of the cylinder chamber 35 is always monitored; and, when it is reduced more than a predetermined pressure, the motor 35 is rotated forward again in order to recover the pressure. Approximately maximum torque is maintained by repeating this control.

FIG. 4 is an explanatory diagram showing an embodiment of the hydraulic control valve unit 44 of the present invention which controls the transmission torque of the friction clutch 16 by driving the hydraulic pump by the motor 42 in FIG. 2. In FIG. 4, the hydraulic pump 48 which is driven forward/reversely by the motor 42 is provided in the hydraulic control valve unit 44. When the hydraulic pump 48 is rotated forward by the motor 42, the hydraulic control valve unit 44 feeds pressurized oil to the cylinder chamber 35 of the clutch control mechanism 25, causes the piston 36 to carry out a stroke toward the left direction, and presses the pressing member 38 via the thrust bearing 32, thereby changing the fastening force of the clutch plates 26 provided between the clutch hub 22 and the clutch drum 24 in the friction clutch 16 and controlling the clutch transmission torque. When the hydraulic pump 48 is stopped after forward rotation by the motor 42, outflow of the pressurized oil from the cylinder chamber 35 is prevented, the pressurized oil is maintained in the cylinder chamber 35, and the clutch transmission torque in the friction clutch 16 is maintained. Furthermore, when the hydraulic pump 48 is rotated reversely by the motor 42, the pressurized oil of the cylinder chamber 35 is forcibly discharged. In order to realize such control functions of the hydraulic control valve unit 44, a first backflow prevention valve 50, a second backflow prevention valve 52, a third backflow prevention valve 54, a forcible valve opening mechanism 56, and a strainer 66 are provided as constituent devices of an hydraulic circuit for the hydraulic pump 48. The forcible opening valve mechanism 56 is composed of a backflow prevention valve 58 and a spool valve 60. The hydraulic control valve unit 44 is housed in the case 10 as shown in FIG. 2, a tank chamber 68 is formed in the case, and the strainer 66 is disposed at an intake part of an inflow path from the tank chamber 68 to the hydraulic pump 48. The hydraulic pump 48 has a first pump port P1 and a second pump port P2. The first pump port P1 feeds pressurized oil to the cylinder chamber 35 upon forward rotation of the hydraulic pump 48 by the motor 42, meanwhile, sucks the oil from the tank chamber 68 side upon reverse rotation. On the other hand, the second pump port P2 sucks the oil from the tank chamber 68 side upon forward rotation of the hydraulic pump 48 by the motor 42 and outputs pressurized oil upon pump reverse rotation. The first backflow prevention valve 50 is provided between the first pump port P1 of the hydraulic pump 48 and the cylinder chamber 35 and feeds pressurized oil to the cylinder chamber 35 upon forward rotation of the hydraulic pump 48, meanwhile, prevents backflow of the pressurized oil from the cylinder chamber 35 upon stop and reverse rotation of the pump. The second backflow prevention valve 52 is provided between the first pump port P1 and the strainer 66 provided at the tank chamber 68 side, prevents backflow of the pressurized oil from the first pump port P1 to the tank chamber 68 side upon forward rotation of the hydraulic pump 48, and releases itself upon pump reverse rotation to cause the oil from the tank chamber 68 to be sucked in from the first pump port P1 via the strainer 66. The third backflow prevention valve 54 is provided between the second pump port P2 of the hydraulic pump 48 and the strainer 66 provided at the tank chamber 68 side, releases itself upon forward rotation of the hydraulic pump 48 side to cause the oil from the tank chamber 68 side to be fed to the second pump port P2, and closes itself upon pump reverse rotation to feed the pressurized oil from the second pump port P2 to the forcible valve opening mechanism 56 as a forcible opening control oil pressure. The forcible valve opening mechanism 56 is disposed between the cylinder chamber 35 and the tank chamber 68; and, upon forward rotation of the hydraulic pump 48, since the forcible opening control oil pressure with respect to a port P4 of the spool valve 60 cannot be obtained, the mechanism is caused to be in a closed state as shown in the drawing to prevent backflow of the pressurized oil from the cylinder chamber 35 to the tank chamber 68. Meanwhile, upon reverse rotation of the hydraulic pump 48, the spool valve 60 is caused to move forward by the forcible opening control oil pressure from the second pump port P2 of the hydraulic pump 48 which is fed when the third backflow prevention valve 54 is closed, thereby forcibly opening the backflow prevention valve 58 and causing the pressurized oil of the cylinder chamber 35 to be discharged from the port P3 to the tank chamber 68. Furthermore, a pressure sensor 70 is provided in the hydraulic control valve unit 44. The pressure sensor 70 detects the pressure of the pressurized oil fed to the cylinder chamber 35 and outputs the pressure detection signal E2 to the controller 40. The controller 40 is a basic function of the driving force distribution apparatus of the present embodiment which controls increase/decrease of the oil pressure of the cylinder 35 chamber so that target torque obtained according to the signal from the vehicle is achieved in 4WD auto based on the signal E1 from the vehicle state sensor 46 of FIG. 2, and the variation of the target torque is varied depending on the state of the vehicle. More specifically, it is desired to be varied slowly in some cases, and it is desired to be rapidly varied in some other cases. The increase of the oil pressure is controlled by the rotation speed of the hydraulic pump 48; therefore, control can be performed by reducing the rotation speed of the motor 42 when it is to be slowly varied or by increasing the rotation speed when it is desired to be rapidly varied. Meanwhile, when the oil pressure is to be reduced, it is controlled by opening/closing the forcible valve opening mechanism 56; however, when the valve opening degree is excessively rapidly changed, the oil pressure of the cylinder chamber 35 is rapidly reduced, and performing control becomes difficult. Therefore, the clearance area of the backflow prevention valve 58 is small at the beginning with respect to the discharge movement distance of the spool valve 60 provided in the forcible opening valve mechanism 56, and the clearance area is designed to be increased along with increase of the discharge movement distance. As a result, when change of the target torque is small, it is controlled in the state in which the discharge movement distance of the spool valve 60 provided in the forcible valve opening mechanism 56 is small; and, when change of the target torque is large, the discharge movement distance of the spool valve 60 provided in the forcible valve opening mechanism 56 is increased, thereby controlling the discharge speed of the pressurized oil from the cylinder chamber 35. The movement of the spool valve 60 provided in the forcible valve opening mechanism 56 is controlled by reverse rotation of the hydraulic pump 48 by the motor 42; meanwhile, the amount of current to the motor 42 is determined by PID control based on the difference between the target torque and the current torque obtained from the detection value of the pressure sensor 70. More specifically, when the difference between the target torque and the current torque is small, the current to the motor 42 is small, and the discharge movement distance of the spool valve 60 is also small; therefore, the discharge speed of the pressurized oil from the cylinder chamber 35 becomes small, and the pressure variation becomes gentle. When the difference between the target torque and the current torque is large, the current to the motor 42 is large, and the discharge movement distance of the spool valve 60 is increased; therefore, the discharge speed of the pressurized oil from the cylinder chamber 35 is increased, and the target can be quickly achieved. In this manner, in control of the clutch transmission torque in 4WD auto, the controller 40 can integrally perform control by PID control of the motor 42 both upon increase and decrease of the pressure. In the case of the 4WD lock based on the signal E1 from the vehicle state sensor 46 of FIG. 2, the controller 40 rotates the motor 42 forward by the motor drive signal E3 to feed the pressurized oil from the first pump port P1 of the hydraulic pump 48 to the cylinder chamber 35, and the pressurized oil of the cylinder chamber 35 is detected by the pressure sensor 70 and fed back to the controller 40 as the pressure detection signal E2. When the detected pressure according to the pressure detection signal E2 is a first pressure set value TH1 corresponding to the maximum transmission torque of the friction clutch 16 corresponding to the 4WD lock, the controller 40 stops the forward rotation of the motor 42. As a result, the hydraulic control valve unit 42 maintains the pressurized oil which is necessary for the maximum torque transmission for maintaining the 4WD lock in the cylinder chamber 35. When the pressure is reduced due to slight leakage or the like of the oil from, for example, the cylinder chamber 35 while the motor 42 which is maintaining the specified pressurized oil in the cylinder chamber 35 is stopped, at the point when the pressure detection signal E2 from the pressure sensor 70 is reduced to a second pressure set value TH2 lower than the first pressure set value TH1, the motor 42 is rotated forward, and intermittent drive of achieving the previous first pressure set value TH1 again is repeated. Then, when the signal E2 instructing switch to the 2WD position is input to the controller 40 from the vehicle state sensor 46 side, the controller 40 reversely rotates the motor 42 by the motor drive signal E3, the reverse rotation of the hydraulic pump 48 caused along it forcibly discharges the pressurized oil of the cylinder chamber 35 by the forcible valve opening mechanism 56, the torque transmission of the friction clutch 16 is released, and the 2WD state is achieved.

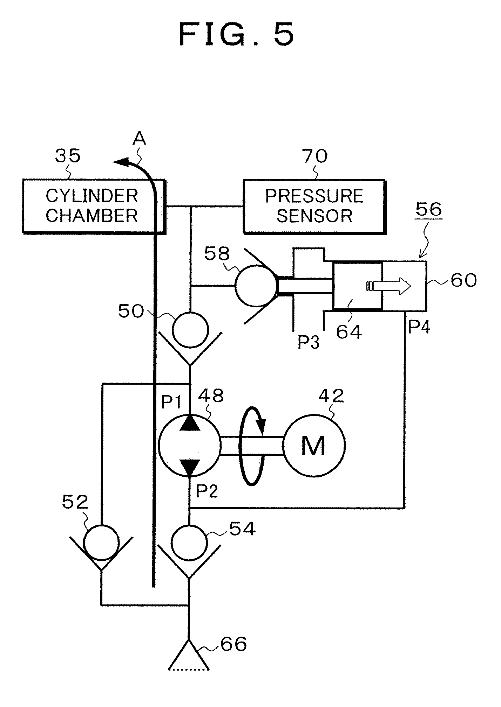

FIG. 5 is an explanatory diagram showing operation upon motor forward rotation in the case in which the pressure of the cylinder chamber is increased in the 4WD auto/lock in the present embodiment. In FIG. 5, when the motor 42 is rotated forward, the hydraulic pump 48 sucks the oil from the second pump port P2 and outputs the pressurized oil from the first pump port P1. Therefore, along with the feeding of the pressurized oil by the hydraulic pump 48 from the first pump port P1, the third backflow prevention valve 54 is released to cause the oil to be sucked from the strainer 66. The first backflow prevention valve 50 is opened by the output of the pressurized oil from the first pump port P1, and the pressurized oil is fed to the cylinder chamber 35 as shown by an arrow A. At this point, the second backflow prevention valve 52 receives the pressurized oil from the first pump port P1 and is closed. The forcible opening control oil pressure with respect to the port P4 of the spool valve 60 of the forcible valve opening mechanism 56 is a tank pressure; therefore, the spool valve element of the spool valve 60 moves backward as shown by an arrow, thereby releasing the forcible open of the backflow prevention valve 58, and the backflow prevention valve 58 receives the pressurized oil fed to the cylinder chamber 35 and caused to be in a closed state.

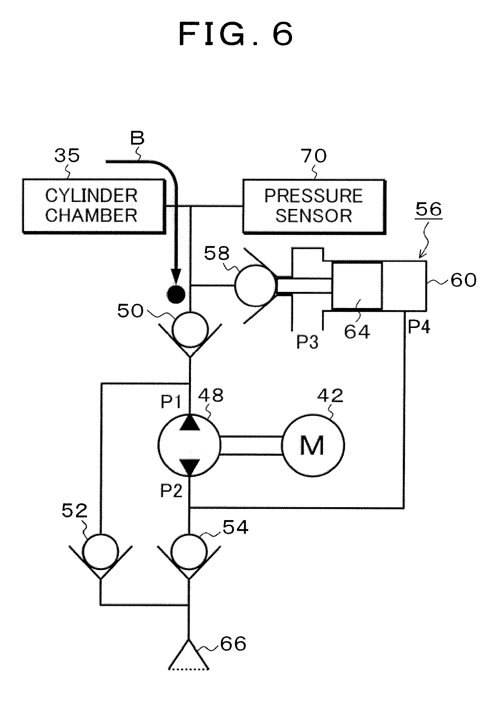

FIG. 6 is an explanatory diagram showing the state in which the motor during forward rotation in the present embodiment is stopped. In FIG. 6, when the motor 42 which is rotating the hydraulic pump 48 forward is stopped, the first backflow prevention valve 50 receives the pressurized oil fed to the cylinder chamber 35 and is closed; thus, backflow of the pressurized oil from the cylinder chamber 35 as shown by an arrow B is prevented. At the same time, the backflow prevention valve 58 of the forcible valve opening mechanism 56 is also closed, and the pressurized oil of the cylinder chamber 35 is retained at the pressure at the point when the motor 42 is stopped. In the retention state of the pressurized oil of the cylinder chamber 35 wherein the motor 42 of FIG. 6 is stopped, the pressure is sometimes gradually reduced along with time elapse due to leakage of the pressurized oil from, for example, the cylinder chamber 35.

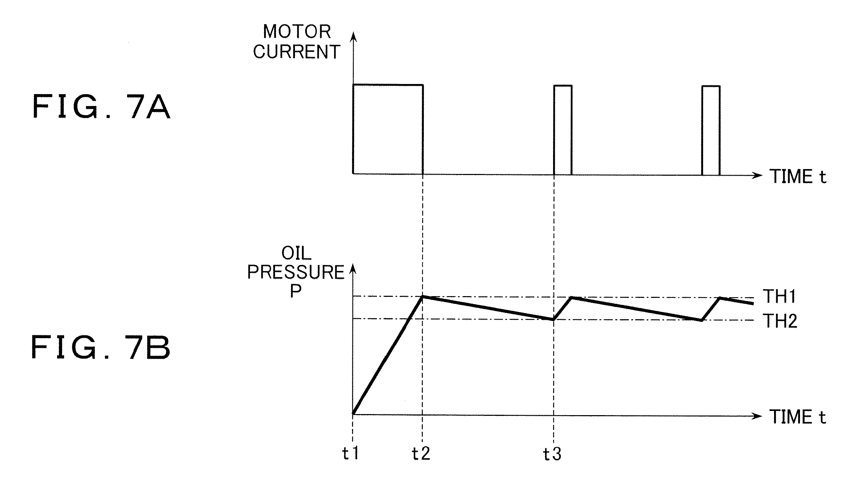

FIGs. 7A and 7B are time charts of the motor control that retains the pressurized oil of the cylinder chamber during motor stoppage of FIG. 6 in the present embodiment. FIG. 7A shows a motor current, and FIG. 7B shows the oil pressure P of the cylinder chamber 35. When forward rotation of the motor 42 is started at time t1 as shown in FIG. 7A, the oil pressure P of the cylinder chamber 35 is approximately linearly increased, the forward rotation of the motor 42 is stopped when the pressure reaches the first pressure set value TH1 which is set in advance, and the pressurized oil retention state of FIG. 6 is achieved. Then, the oil pressure P of the cylinder chamber 35 is gradually reduced along with time elapses; and, when the pressure reaches the second pressure set value TH2 at time t3, the motor 42 is rotated forward again to recover the first pressure set value TH1 and is stopped. When the forward rotation of the motor 42 performed along with such intermittent pressure reduction is repeated, the oil pressure P of the cylinder chamber 35 is retained in the transmission state of approximately maximum torque for maintaining the 4WD lock. As described above, in the present embodiment, the electric power distribution of the motor 42 is basically stopped in the state in which the pressurized oil of the cylinder chamber 35 is retained at the pressurized oil of approximately maximum transmission torque, the operation of temporarily rotating the motor 42 is repeated for recovery when the pressure is reduced due to leakage, a current is not required to be continuously fed to the motor 42 in order to retain the pressurized oil in the cylinder chamber 35, a small motor having small continuous rating can be used as the motor 42 used in the present embodiment, the installation space can be reduced along with downsizing, the weight is also reduced, and the fuel cost of the vehicle can be also improved since the motor consumed current is reduced.

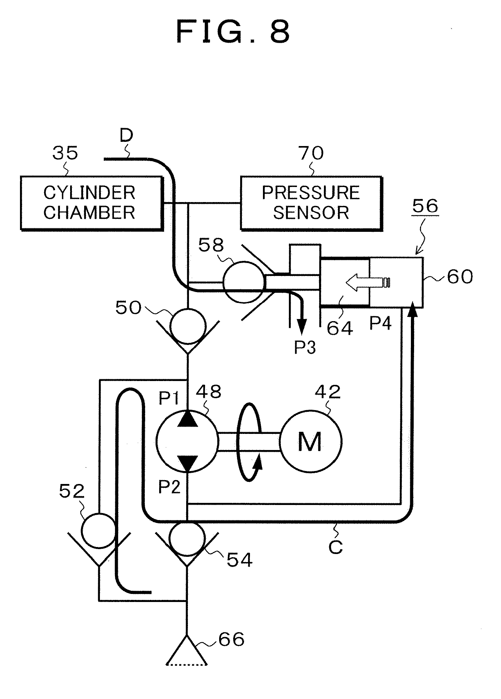

FIG. 8 is an explanatory diagram showing operation upon motor reverse rotation in the present embodiment. In FIG. 8, from the state shown in FIG. 6 in which the pressurized oil is retained in the cylinder chamber 35, when the pressure of the cylinder chamber is desired to be reduced to reduce the transmission torque, the motor 42 is rotated reversely. The reverse rotation of the hydraulic pump 48 caused along with it sucks the oil from the first pump port P1 and outputs it to the second pump port P2. Therefore, along with the sucking of the oil from the first pump port P1, the second backflow prevention valve 52 is opened and causes the oil from the strainer 66 side to be sucked to the first pump port P1. At this point, the first backflow prevention valve 50 receives the pressurized oil from the cylinder chamber 35 and is in a closed state. The third backflow prevention valve 54 receives the pressurized oil from the second pump port P2 of the hydraulic pump 48 and is in a closed state. Therefore, the oil sucked from the first pump port P1 via the strainer 66 and the second backflow prevention valve 52 is pressurized by the hydraulic pump 48, is output to the second pump port P2, and feeds the forcible opening control oil pressure to the port P4 of the spool valve 60 provided in the forcible valve opening mechanism 56 as shown by an arrow C in the state in which the third backflow prevention valve 54 is closed. The spool valve 60 that receives the forcible opening control oil pressure moves the spool valve element 64 forward as shown by an arrow so as to push out the valve element of the backflow prevention valve 58 and forcibly open the discharge channel leading to the port P3; as a result, the pressurized oil of the cylinder chamber 35 is discharged via the path shown by an arrow D, the pressure of the cylinder chamber 35 is reduced, and the transmission torque is reduced.

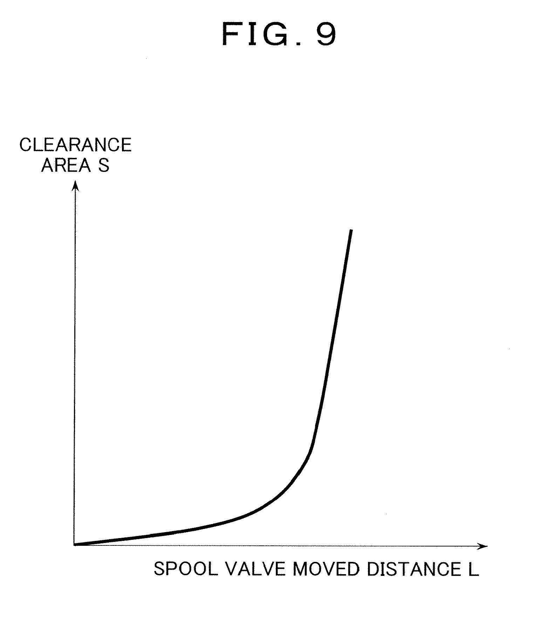

FIG. 9 is an explanatory drawing of a characteristic graph showing the relation between the spool valve moved distance L of the spool valve 60 and the clearance area S of the discharge channel in the case of motor reverse rotation of FIG. 8. In the present embodiment, the increasing rate of the clearance area S at the beginning is low with respect to increase of the spool valve moved distance L of the spool valve 60; however, there is a characteristic that the clearance area S is rapidly increased when the moved distance L is increased. In the present embodiment, in the case of the 4WD auto based on the signal E1 from the vehicle state sensor 46 of FIG. 2, the controller 40 controls the increase/decrease of the oil pressure of the cylinder chamber 35 so that target torque obtained from the signal from the vehicle is achieved, and change of the target torque is varied depending on the state of the vehicle. More specifically, it is desired to be changed slowly in some cases, and it is desired to be changed rapidly in some other cases. The increase of the oil pressure is controlled by the rotation speed of the hydraulic pump 48; therefore, control can be performed by reducing the rotation speed of the motor 42 when it is to be slowly changed and by increasing the rotation speed when it is desired to be rapidly changed. Meanwhile, when the oil pressure is to be reduced, control is performed by opening/closing the forcible valve opening mechanism 56; however, when the valve opening degree is excessively rapidly changed, the oil pressure of the cylinder chamber 35 is rapidly reduced, and performing control becomes difficult. Therefore, as shown in FIG. 9, the clearance area S of the backflow prevention valve 58 is small at the beginning with respect to the spool moved distance L of the spool valve 60 provided in the forcible valve opening mechanism 56, and the clearance area S is increased as the spool moved distance L is increased. As a result, when change of the target torque is small, control is performed in the state in which the spool moved distance of the spool valve 60 provided in the forcible valve opening mechanism 56 is small; and, when change of the target torque is large, the spool moved distance of the spool valve 60 provided in the forcible valve opening mechanism 56 is increased, thereby controlling the discharge speed of the pressurized oil from the cylinder chamber 35. The movement of the spool valve 60 provided in the forcible valve opening mechanism 56 is controlled by reverse rotation of the hydraulic pump 48 by the motor 42, and the amount of current fed to the motor 42 is determined by PID control based on the difference between the target torque and the current torque obtained from the detection value of the pressure sensor 70. In other words, when the difference between the target torque and the current torque is small, the current fed to the motor 42 is small, the spool moved distance of the spool valve 60 is also small; therefore, the discharge speed of the pressurized oil from the cylinder chamber 35 is low, and the pressure change becomes gentle. When the difference between the target torque and the current torque is large, the current fed to the motor 42 is large, and the spool moved distance of the spool valve 60 becomes large; therefore, the discharge speed of the pressurized oil from the cylinder chamber 35 is high, and the target can be quickly achieved. In this manner, with respect to control of the clutch transmission torque in the case of 4WD auto, the controller 40 can integrally perform control by PID control of the motor 42 both upon increase and decrease of the pressure.

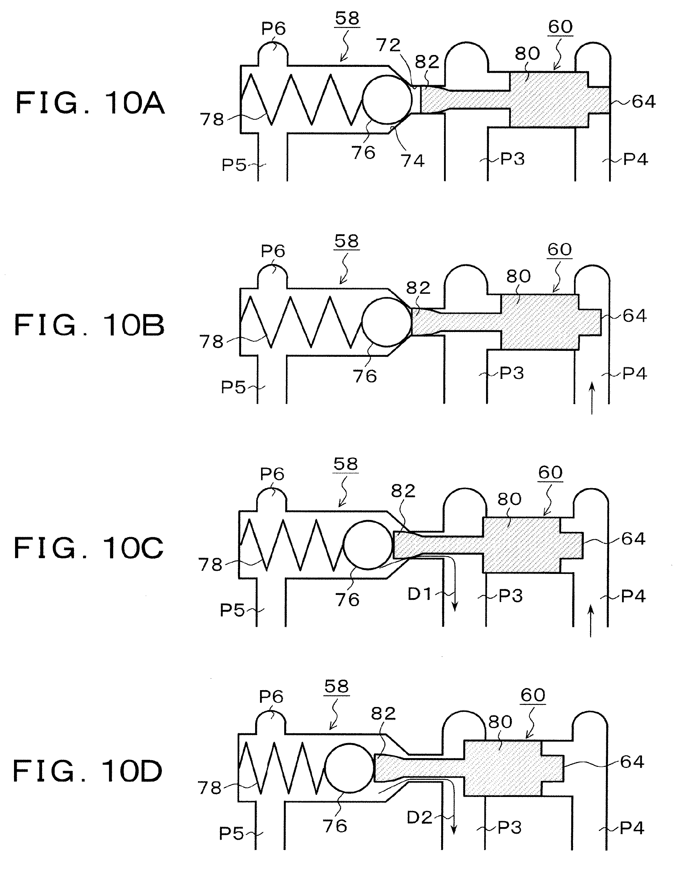

FIGs. 10A, 10B, 10C and 10D are explanatory diagrams showing the structure and operation of the forcible valve opening mechanism 56 in the present embodiment. FIG. 10A shows the state in which the hydraulic pump 42 is rotated forward, and a suction negative pressure of the hydraulic pump 42 is applied to the port P4 of the spool valve 60, the spool valve element 64 abuts the right end and at a position moved backward, and a ball valve element 76 of the backflow prevention valve 58 disposed in front of the spool vale element 64 is pressed by a spring 78 to the valve seat 74 and closes the discharge channel 72.

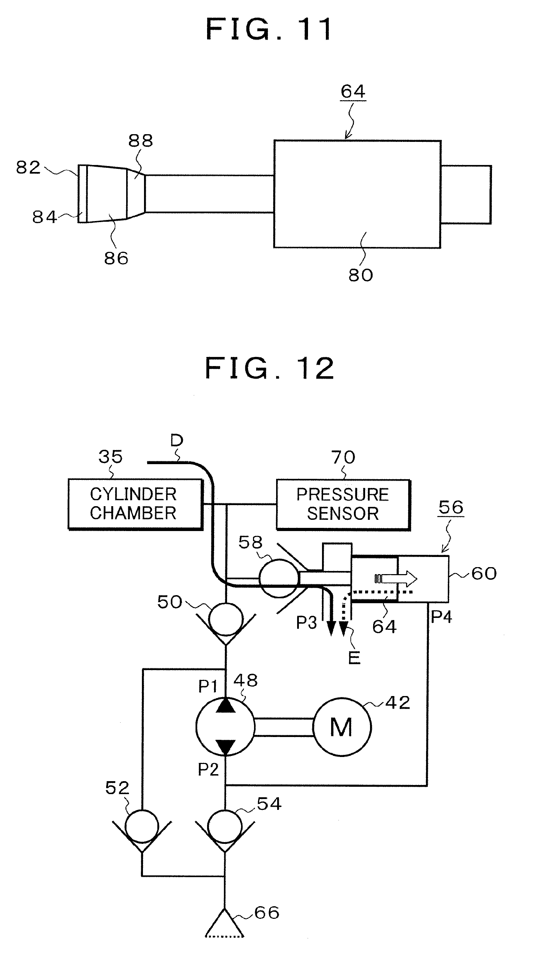

FIG. 11 is an explanatory diagram focusing on and showing the spool valve element 64 of FIGs. 10A, 10B, 10C and 10D. In FIG. 11, the spool valve element 64 forms a first piston 80 at a rear portion and forms a second piston 82 at the distal end. The second piston unit 82 forms a straight unit 84, a first tapered unit 86, and a second tapered unit 88 from the distal end to the rear side. The straight unit 84 has a slight clearance between itself and the discharge channel 72 of FIG. 10A. The radius of the first tapered unit 86 is continued from the straight unit 84 and is gradually reduced. The radius of the second tapered unit 88 is continued from the first tapered unit 86 and rapidly reduced.

FIGs. 10B, 10C, and 10D show the operation when the forcible opening control oil pressure with respect to the port P4 of the spool valve 60 is sequentially increased to move the spool valve element 64 forward. FIG. 10B shows the state in which the spool valve element 64 is moved forward, and the second piston unit 82 at the distal end abuts the ball valve element 76 of the backflow prevention valve 58; wherein discharge of the pressurized oil from a port P6 communicated with the cylinder chamber 35 is not performed.

FIG. 10C shows the case in which the spool valve 64 is further moved forward; wherein the ball valve element 76 is pushed by the distal end of the spool valve element 64 so as to be away from a valve seat 74, thereby opening the discharge channel 72 of the backflow prevention valve 58, and the pressurized oil from the cylinder chamber 35 communicated from the port P6 is discharged to the port P3 communicated with the tank chamber as shown by an arrow D1. At this point, the first tapered unit 86 of the spool valve element 64 shown in FIG. 11 is positioned at a flow-in opening portion of the discharge channel 72 along with pushing of the ball valve element 76; therefore, the discharge flow rate can be obtained in accordance with the clearance area along with the radius reduction of the first tapered unit 86.

FIG. 10D shows the state in which the spool valve element 64 is further moved forward to push the ball valve element 76; wherein, at this point, the second tapered unit 88 of the spool valve element 64 shown in FIG. 11 is positioned at the opening portion of the discharge flow rate 72, the clearance area becomes maximum, and the pressurized oil from the cylinder chamber 35 communicated with the port P6 can be discharged to the port P3 communicated with the tank as shown by an arrow D2 at a sufficient flow rate. Herein, the tapered units are not limited to have two levels, but they may be continuously varied. The characteristic of the clearance area S with respect to the spool valve element moved distance L shown in FIG. 9 is obtained by the movement of the spool valve element 64 shown in FIGs. 10A, 10B, 10C and 10D using the spool valve element 64 shown in FIG. 11. As described above, in the present embodiment, discharge of the pressurized oil from the cylinder chamber 35 is performed by forcibly opening the backflow prevention valve 58 by operation of the spool valve 60 without depending on discharge from an orifice or discharge from a clearance in the hydraulic pump like conventional techniques; therefore, even when the pump capacity of the hydraulic pump 48 is reduced along with usage of the small motor 42 having small continuous rating, the pressurized oil can be discharged at a high speed from the cylinder chamber 35, and sufficient responsivity of the transmission torque adjustment upon the 4WD auto/lock can be ensured. Moreover, 4WD lock and switching from the 4WD auto to the 2WD can be quickly performed.

FIG. 12 is an explanatory diagram showing operation of the case in which the motor is stopped during reverse rotation in the present embodiment. In FIG. 12, when the motor 42 is stopped during the reversely rotated state, the pressurized oil from the second pump port P2 of the hydraulic pump 48 with respect to the spool valve 60 retains the forcible opening control oil pressure at that point since both the second backflow prevention valve 52 and the third backflow prevention valve 54 at the tank side via the strainer 66 are closed, and the spool valve element 64 of the spool valve 60 retains the spool position at the point of stoppage. Therefore, discharge of the pressurized oil corresponding to the opening area of the discharge channel at the point of stoppage is continuously performed from the cylinder chamber 35 to the port P3. In this process, in the stopped state of the motor 42, receiving the pressurized oil of the cylinder chamber 35, the force pressing the spool valve element 64 toward the right direction is applied; therefore, as shown by an arrow E of a dotted line, the pressurized oil having the forcible opening control pressure at the port P4 side is discharged through the clearance of the spool valve element 64, and the spool valve element 64 is gradually moved backward toward the right direction. Therefore, even when the reverse rotation of the motor 42 is stopped in the state in which the pressurized oil is remaining in the cylinder chamber 35, although a certain length of time is taken, the pressurized oil at the port P4 side of the spool valve element 64 is also discharged to the port P3, and the tank pressure can be recovered.

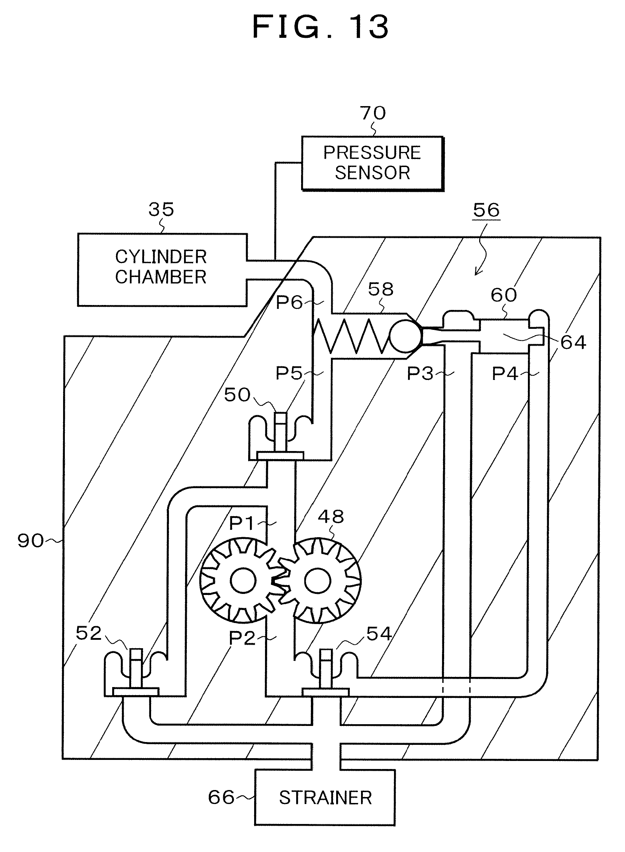

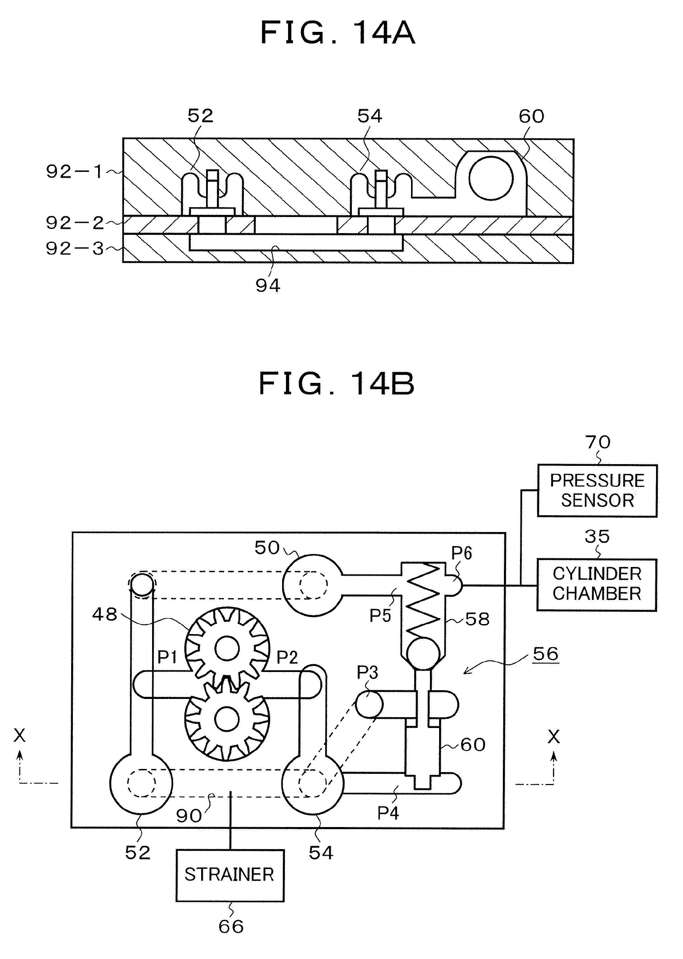

FIG. 13 is an explanatory diagram showing, in an actual manner, a hydraulic circuit of the hydraulic control valve unit in the present embodiment, and FIGs. 14A and 14B are explanatory diagrams showing specific structures of the circuit of FIG. 13. In FIG. 13, elements correspond to those of FIG. 4, respectively.

FIG. 14A shows a cross sectional diagram, and FIG. 14B shows a front view. As is clear from FIG. 14A, in the present embodiment, the hydraulic control valve unit is realized by stacking three block members 92-1, 92-2, and 92-3. By stacking the three block members 92-1 to 92-3, the arrangement of the devices in the hydraulic control valve unit 44 of FIG. 3 and oil channels connecting them shown in FIG. 14B are formed. More specifically, the hydraulic pump 48 using a gear pump in FIG. 14B is disposed at a position of the block member 92-2 at the center of FIG. 14A; and the first backflow prevention valve 50, the second backflow prevention valve 52, the third backflow prevention valve 54, and the backflow prevention valve 58 and the spool valve 60 provided in the forcible valve opening mechanism 56 are incorporated and disposed in the block member 92-1 at the top in FIG. 14A. The oil channels shown by broken lines in FIG. 14B are formed in the lowest block member 92-3 as shown by, for example, an oil channel 94 connecting the second backflow prevention valve 52 and the third backflow prevention valve 54 of FIG. 14A. In the specific embodiment of FIGs. 14A and 14B, circuit formation and incorporation of circuit devices by stacking the three block members 92-1 to 92-3 of the hydraulic control valve unit 44 in the present embodiment enable compact production with small space, and reduction of the size and weight as a whole can be readily achieved. The actual incorporation structure in the present embodiment is not limited to that of FIGs. 14A and 14B, and an arbitrary structure can be employed as long as the structure realizes the circuit and circuit devices of the hydraulic control valve unit 44 shown in FIG. 3.

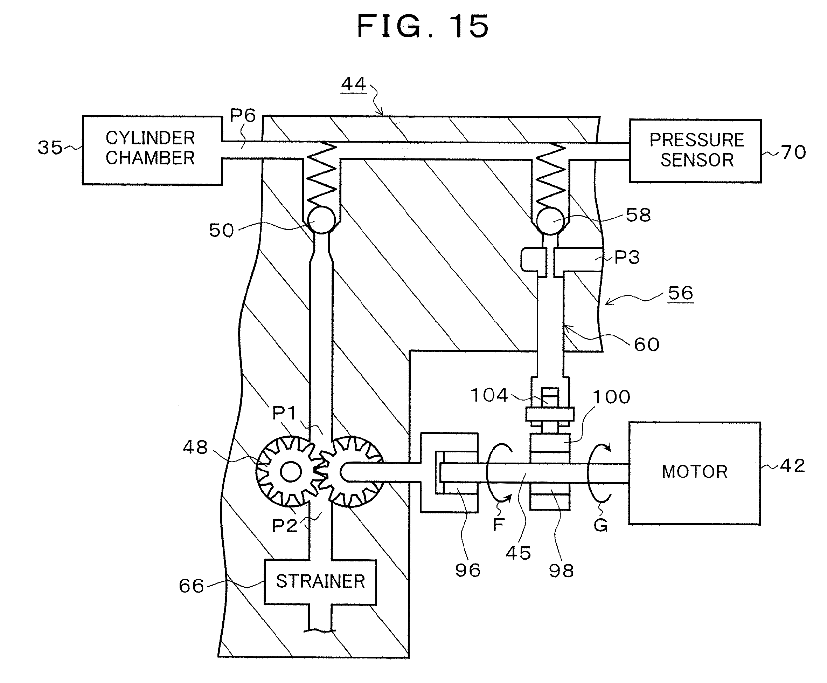

FIG. 15 is an explanatory diagram showing another embodiment which mechanically performs the oil discharge operation of the control valve mechanism by motor reverse rotation by using two one-way clutches. In FIG. 15, in the hydraulic control unit 44 of the present embodiment, a drive shaft 45 of the motor 42 is coupled to the hydraulic pump 48 via a one-way clutch for pump drive 96, and the forcible valve opening mechanism 56 driven by a one-way clutch for oil pressure release 98 provided with respect to the drive shaft 45 is provided. When the left rotation shown by an arrow F when the motor 42 is viewed from the rear side is taken as forward rotation, and the right rotation shown by an arrow G is reverse rotation, the one-way clutch for pump drive 96 and the one-way clutch for oil pressure release 98 are operated in the following manner. When the motor drive shaft 45 of the motor 42 is rotated forward as shown by the arrow F, the one-way clutch for pump drive 96 is caused to be in a locked state, transmits the rotation of the motor drive shaft 45 to the hydraulic pump 48, pressurizes the oil sucked from the tank chamber side by the port P2 via the strainer 66, and feeds an oil pressure to the cylinder chamber 35 of the pressurizing control mechanism from the port P1 via the first backflow prevention valve 50. On the other hand, when the motor 42 is reversely rotated as shown by the arrow G, the one-way clutch for pump drive 96 becomes free, and reverse rotation of the hydraulic pump 48 is not performed. Meanwhile, oppositely, in the forward rotation of the motor 42 shown by the arrow F, the one-way clutch for oil pressure release 98 becomes free, is caused to be in the locked state in the reverse rotation shown by the arrow G, transmits the rotation of the motor drive shaft 45, and operates to release the forcible valve opening mechanism 56.

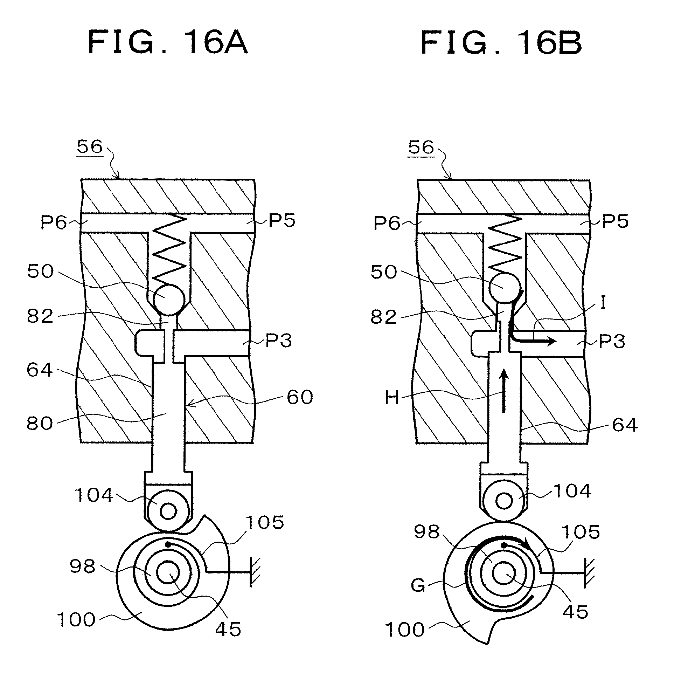

FIGs. 16A and 16B shows the state when the one-way clutch for oil pressure release 98 and the forcible valve opening mechanism 56 actuated by that are viewed from the direction of the motor shaft.

FIG. 16A shows the initial state of the one-way clutch for oil pressure release 98, and a cam 100 is provided in the outer lace side of the one-way clutch for oil pressure release 98. The cam 100 has a cam shape in which the radius is linearly increased with respect to the rotation angle. A bottom of the spool valve element 64 of the spool valve 60 provided in the forcible valve opening mechanism 56 abuts the cam 100 via a cam follower 104. The spool valve 60 is same as the embodiment of FIG. 4; more specifically, it comprises the first piston unit 80 and the second piston unit 82 as shown in FIGs. 10A, 10B, 10C and 10D; the second piston unit 82 is positioned in the valve path to the backflow prevention valve 50; and the shape of the second piston unit 82 comprises the straight unit 84, the first tapered unit 86, and the second tapered unit 88 as shown in FIG. 11. Furthermore, with respect to the cam 100 attached to the outer case side of the one-way clutch for oil pressure release 98, a return spring 105 for returning it to the initial position shown in the drawing is provided.

FIG. 16B shows the operation of the case in which the motor 42 is rotated reversely in FIG. 15. When the forcible valve opening mechanism 56 is actuated to allocate the oil pressure from the cylinder chamber 35 to the tank chamber side, the motor 42 is reversely rotated as shown by the arrow G. In this case, as shown in FIG. 16B, the one-way clutch for oil pressure release 98 is caused to be in the locked state when the motor drive shaft 45 is rotated reversely as shown by the arrow G, and the cam 100 is reversely rotated integrally with the motor drive shaft 45 and pushes up the spool valve element 64 via the cam follower 104 as shown by an arrow H. Therefore, the second piston unit 82 of the spool valve element 64 pushes up the ball valve element of the backflow prevention valve 50 to open the channel, and the pressurized oil from the cylinder chamber 35 is discharged to the tank chamber side from the port P6 to the port P3 through the forcibly opened backflow prevention valve 50 as shown by an arrow I. In this process, the relation of the clearance area of the second piston unit 82 with respect to movement of the spool valve element 64 is the characteristic shown in FIG. 9. The control of the motor 42 in the embodiment of FIG. 15 is performed by the controller 40 as well as the embodiment of FIG. 4; and, for example, in the case in which control of the 4WD auto is taken as an example, when the pressure of the cylinder chamber 35 is smaller than the target pressure corresponding to the target torque, the motor 42 is rotated forward to drive the hydraulic pump 48 via the one-way clutch for pump drive 96, thereby increasing the pressure. When the pressure of the cylinder chamber 35 is larger than the target pressure, the motor 42 is reversely rotated, and the spool valve element 64 is pushed up via the one-way clutch for oil pressure release 98, thereby driving the forcible valve opening mechanism 56, releasing the oil pressure of the cylinder chamber 35, and reducing the pressure.

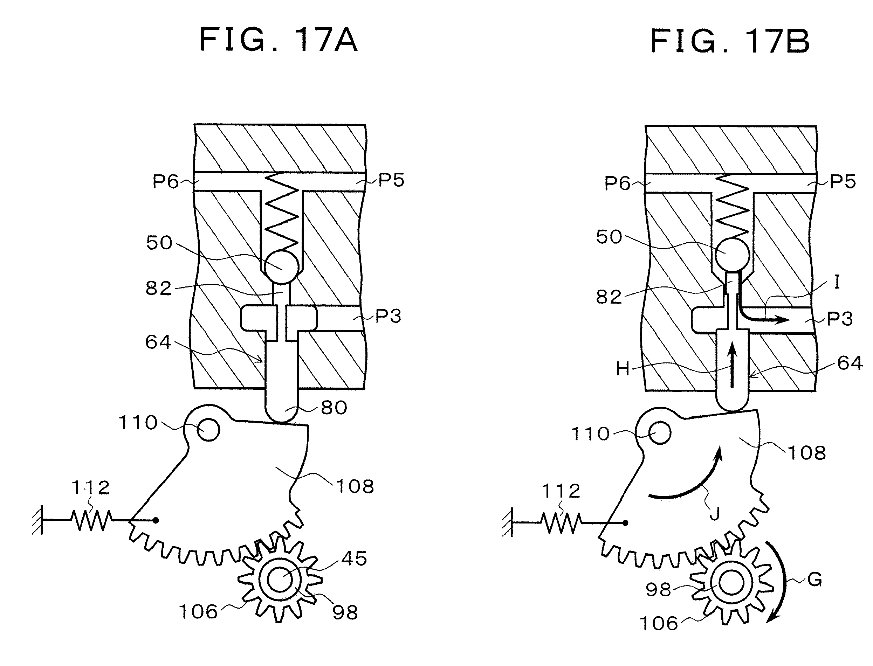

FIGs. 17A and 17B show another embodiments of mechanical drive of the forcible valve opening mechanism 56 by the one-way clutch for oil pressure release 98 in the embodiment of FIG. 15. In the embodiments of FIGs. 17A and 17B, a drive gear 106 is attached to the outer case side of the one-way clutch for oil pressure release 98 provided on the motor drive shaft 45, a fan-shaped driven gear 108 is disposed rotatably about a shaft 110 so as to be meshed with the drive gear 106, and the lower end of the spool valve element 64 provided in the forcible valve opening system 56 is mounted on a side end of the driven gear 108. In addition, a return spring 112 for returning to the initial position of FIG. 17A is provided for the driven gear 108.

FIG. 17B shows oil pressure releasing operation upon motor reverse rotation. When the motor drive shaft 45 is reversely rotated as shown by the arrow G, the one-way clutch for oil pressure release 98 is caused to be in the locked state, the drive gear 106 in the outer case side is also reversely rotated, and the driven gear 108 turns in the direction shown by an arrow J and pushes up the spool valve element 64. By the pushing-up of the spool valve element 64, the second piston unit 82 positioned in the communication path to the backflow prevention valve 50 pushes up the ball valve element and increases the clearance area, thereby discharging the pressurized oil from the cylinder chamber 35 connected to the port P6 to the tank chamber side from the port P3 as shown by an arrow I and reducing the pressure.

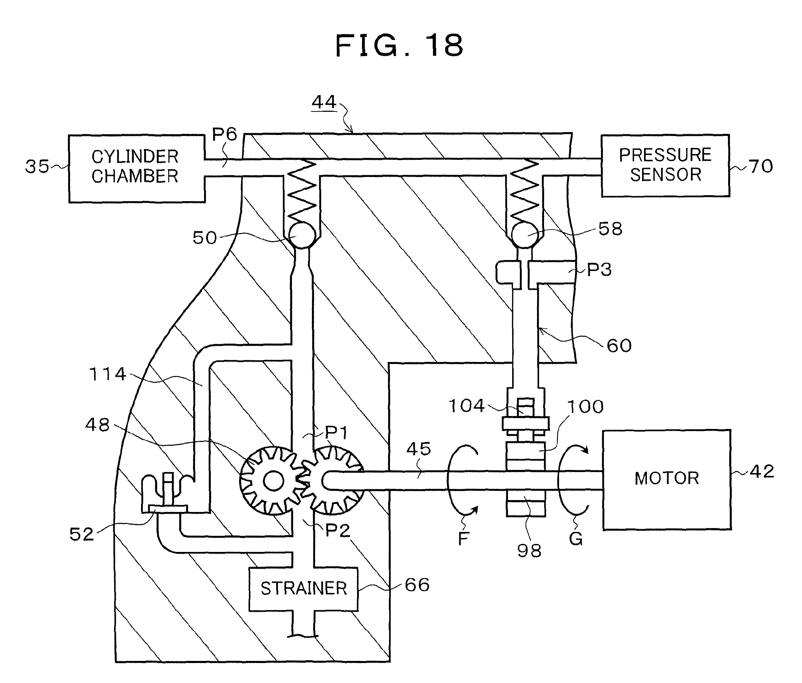

FIG. 18 is an explanatory diagram showing another embodiment in which the oil discharge operation of the control valve mechanism is mechanically performed by motor reverse rotation by using merely the one-way clutch for oil pressure release. In the embodiment of FIG. 18, the one-way clutch for pump drive 96 shown in the embodiment of FIG. 15 is removed, and merely the one-way clutch for oil pressure release 98 is used. Along with removal of the one-way clutch for oil pressure drive, a bypass circuit 114 comprising the second backflow prevention valve 52 between the ports P1 and P2 of the hydraulic pump 48 is provided. The operation of the embodiment of FIG. 18 is as described below. When the motor 42 is rotated forward as shown by the arrow F, the hydraulic pump 48 is driven since the motor drive shaft 45 is directly coupled to the hydraulic pump 48, the oil is sucked from the port P2 via the strainer portion 66, and the oil pressure is fed to the cylinder chamber 35 from the port P1 via the first backflow prevention valve 50 and increases the pressure. The one-way clutch for oil pressure release 98 at this point is free. When the pressure of the cylinder chamber 35 is to be reduced, the motor 42 is reversely rotated as shown by the arrow G. When reverse rotation of the motor 42 is performed, the one-way clutch for oil pressure release 98 is caused to be in the locked state to reversely rotate the cam 100 attached to the outer case side as shown in FIG. 16B and pushes up the spool valve element 64; as a result, the clearance area of the communication path of the backflow prevention valve 50 is increased, the pressurized oil of the cylinder chamber 35 from the port P6 is discharged to the port P3 side as shown by the arrow I, and the pressure of the cylinder chamber 35 is reduced. When the hydraulic pump 48 is reversely rotated upon reverse rotation of the motor 42 for discharging the pressurized oil of the cylinder chamber 35, the port P1 side becomes an oil feeding port and the port P2 side becomes a tank port that is opposite to the case of forward rotation; and, since the bypass circuit 114 comprising the second backflow prevention valve 52 is provided, the oil is circulated via the bypass circuit 14 when the hydraulic pump 48 is reversely rotated, and the port P1 side is not caused to be in a vacuum state in the reverse rotation of the hydraulic pump 48. On the other hand, when the bypass circuit 14 of the second backflow prevention valve 52 is not provided, the oil is sucked from the port P1 side by reverse rotation of the hydraulic pump 48 and discharged to the port P2; therefore, the part between the first backflow prevention valve 50 and the port P1 is vacuumed and becomes a vacuumed state. Therefore, when the motor 42 is rotated forward to switch to pressure increase of the cylinder chamber 35 after the oil pressure of the cylinder chamber 35 is reduced by reversely rotating the motor 42, the oil that fills the vacuumed amount at the port P1 side has to be excessively fed; therefore, the responsivity of the pressure increase of the cylinder chamber 35 is delayed. Such responsivity delay of the pressure increase of the cylinder chamber 35 when the motor 42 is switched from the reverse rotation to the forward rotation can be eliminated by providing the bypass circuit 114 comprising the second backflow prevention valve 52. Also in the embodiment of FIG. 18, the motor 42 is controlled by the controller 40 shown in FIG. 4. For example, when the control of the 4WD auto by the controller 40 is taken as an example, in the case in which the pressure of the cylinder chamber 35 detected by the pressure sensor 70 is small with respect to a target pressure corresponding to target transmission torque of the friction clutch, the motor 42 is rotated forward to drive the hydraulic pump 48, thereby increasing the pressure. When the pressure of the cylinder chamber 35 is larger than the target pressure, the motor 42 is rotated reversely to drive the forcible valve opening mechanism 56 and discharge the pressurized oil of the cylinder chamber 35, thereby reducing the pressure. Furthermore, as another embodiment of the present invention, when delay of the responsivity of pressure increase of the cylinder chamber 35 when the motor 42 is rotated forward is permissible, the bypass circuit 114 equipped with the second backflow prevention valve 52 provided in the embodiment of FIG. 18 may be removed from the constitution. Thus, corresponding to the amount that the bypass circuit 114 equipped with the second backflow prevention valve 52 is removed, the device constitution can be simplified and downsized to reduce the cost. Next, zero-point learning control of the pressure sensor 70 by the pressure sensor zero-point learning unit 40a and the detection pressure correcting unit 40b provided in the controller 40 of FIG. 3 will be described. In a four-wheel drive vehicle to which the present embodiment is applied, the vicinity of transmission torque zero of the friction clutch 16 has an important meaning. More specifically, a brake phenomenon (tight corner braking) during tight cornering of a paved road annoys users; therefore, in this state, the transmission torque is desired to be close to zero as much as possible. However, in the present embodiment, the signal voltage of the pressure detection signal E2 of the pressure sensor 70 is fed back to the controller 40; therefore, the sensor accuracy, without being changed, affects the torque transmission accuracy. The accuracy of the pressure sensor 70 is ensured as an error with respect to a full-scale value; therefore, the error of the pressure detection signal E2 with respect to the actual pressure is the largest in the vicinity of pressure zero. Typical error factors that determine the accuracy of the pressure sensor 70 include solid object variation, durability deterioration, and temperature drift. In order to solve this problem, in the present embodiment, the pressure sensor zero-point learning unit 40a and the detection pressure correcting unit 40b are provided to the controller 40, zero-point learning control of the pressure sensor 70 is performed, and the solid object variation and durability deterioration among the variation factors of the pressure sensor 70 is corrected. The pressure sensor zero-point learning unit 40a reversely rotates the motor 48 upon vehicle activation so as to release the oil pressure of the cylinder chamber 35 by actuation of the forcible valve opening mechanism 56, reads the detection value of the pressure sensor 70 in this state, and saves it as zero-point correction value ΔP. The zero-point detection value ΔP is a positive value if the detection value is equal to or less than zero and is a negative value if it is equal to or more than zero. The detection pressure correcting unit 40b saves the zero-point correction value by the pressure sensor zero-point learning unit 40a and then corrects the detection value of the pressure sensor 70 read during operation of the vehicle by the zero-point correction value zero point.

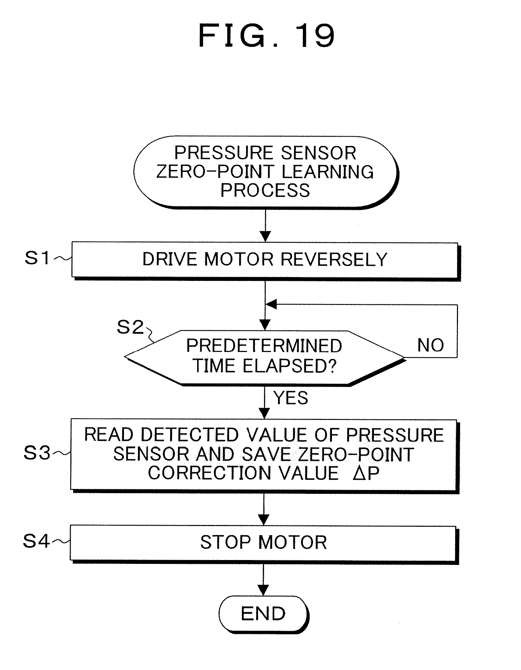

FIG. 19 is a flow chart showing a pressure sensor zero-point learning process by the pressure sensor zero-point learning unit 40a of the present embodiment, and this is executed every time the vehicle is activated. In FIG. 19, first of all, in step S1, the motor 48 is reversely rotated so as to release the oil pressure of the cylinder chamber 35 by actuation of the forcible valve opening mechanism 56. Subsequently, elapse of predetermined time in which the oil pressure release by the motor reverse drive in step S1 is completely performed is waited for in step S2; the process proceeds to step S3 in which the detection value of the pressure sensor 70 is read in this state and saved as the zero-point correction value ΔP; and, in step S4, the motor 48 is stopped and the process is terminated.

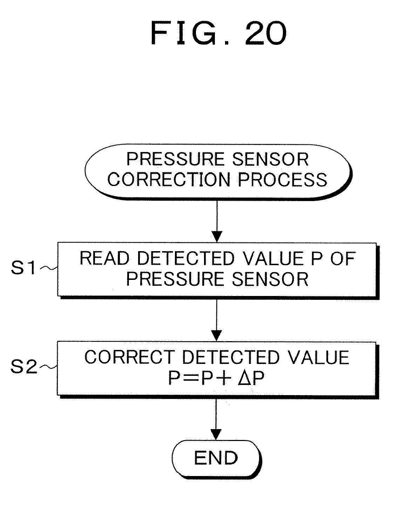

FIG. 20 is a flow chart showing a pressure sensor correction process by the detection pressure correcting unit 40b of the present embodiment. In FIG. 20, when the detection value P of the pressure sensor 70 is read in step S1, the process proceeds to step S2 in which the zero-point correction value ΔP obtained in the pressure sensor zero-point learning process of FIG. 19 is added to the detection value P to perform correction. Therefore, the error with respect to the actual pressure of the detection value of the pressure sensor 70 is corrected, for example highly accurate control that causes the transmission torque during tight cornering in a paved road to be close to zero as much as possible can be performed, the annoyance of the user due to the brake phenomenon (tight cornering braking) caused by the transmission torque generated due to the error in the vicinity of pressure zero point is eliminated, and appropriate operation stability of cornering can be obtained. Note that the present invention includes arbitrary modifications that do not impair the object and advantages thereof, and the present invention is not limited by the above described numerical values.

## Claims

1. A driving force distribution apparatus which transmits motive power by a friction clutch, comprising:
a piston which generates pressing force against the friction clutch by an oil pressure;
a cylinder chamber which houses the piston movably in an axial direction;
an hydraulic pump which feeds the pressurized oil to the cylinder chamber when rotated forward;
a motor which drives the hydraulic pump;
a first backflow prevention valve which is between the hydraulic pump and the cylinder chamber and prevents backflow of the pressurized oil from the cylinder chamber;
a control valve mechanism which discharges the pressurized oil of the cylinder chamber when the motor is reversely rotated;
a pressure sensor which detects the oil pressure of the cylinder chamber; and
a control unit which controls the forward/reverse drive of the motor based on target transmission torque obtained from a signal from outside and a signal from the pressure sensor; wherein
the control unit is operated so as to increase the oil pressure of the cylinder chamber by forward rotation of the motor, retain the oil pressure when the forward rotation is stopped, and reduce the oil pressure by reverse rotation, thereby controlling the transmission torque of the friction clutch to be the target transmission torque.

2. The driving force distribution apparatus according to claim 1, wherein
when two ports provided in the hydraulic pump are a first pump port which serves as a discharge port in pump forward rotation and serves as a suction port in pump reverse rotation and a second pump port which serves as a suction port in pump forward rotation and serves as a discharge port in pump reverse rotation,
the control valve mechanism comprises
a second backflow prevention valve which is disposed between the first pump port and a tank chamber, prevents backflow of the pressurized oil from the first pump port to the tank chamber in pump forward rotation, and is opened in pump reverse rotation so as to feed and cause the oil to be sucked from the tank chamber to the first pump port side;
a third backflow prevention valve which is disposed between the second pump port and the tank chamber, is opened in pump forward rotation so as to feed and cause the oil from the tank chamber to be sucked to the second pump port, and is closed in pump reverse rotation so as to feed the pressurized oil from the second pump port as a forcible opening control oil pressure; and
a forcible valve opening mechanism which is disposed between the cylinder chamber and the tank chamber, is closed in pump forward rotation so as to prevent backflow of the pressurized oil from the cylinder chamber to the tank chamber, and is forcibly opened by the forcible opening control oil pressure fed by closure of the third backflow prevention valve in pump reverse rotation so as to discharge the pressurized oil of the cylinder chamber to the tank chamber.

3. The driving force distribution apparatus according to claim 2, wherein the forcible valve opening mechanism has
a backflow prevention valve which receives the pressurized oil of the cylinder chamber so as to close a discharge channel to the tank chamber; and
a spool valve which is moved backward in the pump forward rotation so as to permit the movement of a valve element of the backflow prevention valve to a closed position, and is moved forward by the forcible opening control oil pressure fed by closure of the third backflow prevention valve in pump reverse rotation so as to push and move the valve element of the backflow prevention valve to an open position.

4. The driving force distribution apparatus according to claim 3, wherein
the backflow prevention valve forms a valve seat in a flow-in side of the discharge channel communicated with an end of a spool hole formed in the axial direction and disposes the valve element, which closes the channel when pressed by the pressurized oil of the cylinder chamber, at the valve seat; and
the spool valve is provided with, with respect to the spool hole, a drain port which discharges the pressurized oil from the discharge channel of the backflow prevention valve to the tank and a control port which feeds the forcible control pressurized oil, the spool valve element is disposed axially movable in the spool hole, and the spool valve element forms, at a rear portion, a first piston unit which is moved forward by the pressurized oil from the control port and forms, at a distal end portion, a second piston unit which presses and opens the backflow prevention valve, the second piston unit has a shape in which clearance is varied from the distal end side to the rear so as to increase the discharge flow rate in accordance with forward movement of the spool valve element.

5. The driving force distribution apparatus according to claim 2, wherein the forcible valve opening mechanism
constitutes a pressurized oil circulation system by commonly connecting a communication path to the tank chamber, and a strainer is disposed at the common connecting part.

6. The driving force distribution apparatus according to claim 1, wherein, when target torque of the friction clutch is to be retained at predetermined torque, the control unit stops motor electric power distribution so as to stop the pump when the detection pressure of the pressure sensor reaches a first set pressure corresponding to the predetermined torque in the state in which the hydraulic pump is rotated forward by the electric power distribution of the motor and, every time the detection pressure of the pressure sensor is reduced to a second set pressure which is lower than the first set pressure in the pump stopped state, repeats pump forward rotation by electric power distribution of the motor until the first set pressure is recovered.

7. The driving force distribution apparatus according to claim 1, wherein the control valve mechanism comprises
a one-way clutch for pump drive which transmits forward rotation of the motor to the hydraulic pump and becomes free in reverse rotation of the motor;
a one-way clutch for oil pressure release which transmits reverse rotation of the motor and becomes free in forward rotation of the motor; and
a forcible valve opening mechanism which is disposed between the cylinder chamber and the tank chamber, and is forcibly opened by the reverse rotation of the motor transmitted via the one-way clutch for oil pressure release so as to discharge the pressurized oil of the cylinder chamber to the tank chamber.

8. The driving force distribution apparatus according to claim 1, wherein
when two ports provided in the hydraulic pump are a first pump port which serves as a discharge port in pump forward rotation and serves as a suction port in pump reverse rotation and a second pump port which serves as a suction port in pump forward rotation and serves as a discharge port in pump reverse rotation,
the control valve mechanism comprises
a one-way clutch for oil pressure release which transmits reverse rotation of the motor and becomes free in forward rotation of the motor; and
a forcible valve opening mechanism which is disposed between the cylinder chamber and the tank chamber and is forcibly opened by the reverse rotation of the motor transmitted via the one-way clutch for oil pressure release so as to discharge the pressurized oil of the cylinder chamber to the tank chamber.

9. The driving force distribution apparatus according to claim 1, wherein
when two ports provided in the hydraulic pump are a first pump port which serves as a discharge port in pump forward rotation and serves as a suction port in pump reverse rotation and a second pump port which serves as a suction port in pump forward rotation and serves as a discharge port in pump reverse rotation,
the control valve mechanism comprises
a second backflow prevention valve which is disposed between the first pump port and the tank chamber, prevents backflow of the pressurized oil from the first pump port to the tank chamber in pump forward rotation, and is opened in pump reverse rotation so as to feed and cause the oil from the tank chamber to be sucked to the first pump port side;
a one-way clutch for oil pressure release which transmits reverse rotation of the motor and becomes free in forward rotation of the motor; and
a forcible valve opening mechanism which is disposed between the cylinder chamber and the tank chamber and is forcibly opened by the reverse rotation of the motor transmitted via the one-way clutch so as to discharge the pressurized oil of the cylinder chamber to the tank chamber.

10. The driving force distribution apparatus according to any one of claims 7 to 9, wherein the forcible valve opening mechanism comprises
a backflow prevention valve which receives the pressurized oil of the cylinder chamber so as to close the discharge channel to the tank chamber; and
a spool valve which is moved by the reverse rotation of the motor transmitted via the one-way clutch so as to push and move a valve element of the backflow prevention valve to an open position.

11. The driving force distribution apparatus according to claim 1, wherein the control unit comprises
a pressure sensor zero-point learning unit which causes the motor to rotate reversely upon vehicle initiation so as to release the oil pressure of the cylinder chamber by actuation of the forcible valve opening mechanism, reads a detection value of the pressure sensor in this state, saves the value as a zero-point correction value; and
a detection pressure correcting unit which corrects the detection value of the pressure sensor read during operation of the vehicle by the zero-point correction value.
